Europäisches Patentamt

European Patent Office

Office européen des brevets

(19)

(11) **EP 1 375 630 A1**

(12) **EUROPEAN PATENT APPLICATION**
published in accordance with Art. 158(3) EPC

(43) Date of publication:
02.01.2004 Bulletin 2004/01

(51) Int Cl.⁷: **C10L 3/00**, B01J 19/00

(21) Application number: 02713229.9

(86) International application number:
PCT/JP2002/003084

(22) Date of filing: 28.03.2002

(87) International publication number:
WO 2002/079355 (10.10.2002 Gazette 2002/41)

(84) Designated Contracting States:
AT BE CH CY DE DK ES FI FR GB GR IE IT LI LU
MC NL PT SE TR

(30) Priority: 29.03.2001 JP 2001097104

(71) Applicant: Mitsubishi Heavy Industries, Ltd.
Tokyo 100-8315 (JP)

(72) Inventors:
• KIMURA, Takahiro, Mitsubishi Heavy Ind., Ltd.
Kobe-shi, Hyogo 652-8585 (JP)
• IWASAKI, Shojiro, Mitsubishi Heavy Ind., Ltd.
Kobe-shi, Hyogo 652-8585 (JP)
• ITOH, Katsuo, Mitsubishi Heavy Ind., Ltd.
Kobe-shi, Hyogo 652-8585 (JP)
• UEHARA, Satoru, Mitsubishi Heavy Ind., Ltd.
Kobe-shi, Hyogo 652-8585 (JP)
• YOSHIKAWA, Kozo, Mitsubishi Heavy Ind., Ltd.
Takasago-shi, Hyogo 676-8686 (JP)

• NAGAYASU, Hiromitsu,
Mitsubishi Heavy Ind., Ltd.
Takasago-shi, Hyogo 676-8686 (JP)
• EMA, Haruhiko, Mitsubishi Heavy Ind., Ltd.
Takasago-shi, Hyogo 676-8686 (JP)
• WATABE, Masaharu, Mitsubishi Heavy Ind., Ltd.
Takasago-shi, Hyogo 676-8686 (JP)
• KONDO, Yuichi, Mitsubishi Heavy Ind., Ltd.
Kobe-shi, Hyogo 652-8585 (JP)
• FUJITA, Hisayoshi, Mitsubishi Heavy Ind., Ltd.
Kobe-shi, Hyogo 652-8585 (JP)
• ENDO, Hitoshi, Mitsubishi Heavy Ind., Ltd.
Kobe-shi, Hyogo 652-8585 (JP)
• KITA, Yoshihiro, Mitsubishi Heavy Ind., Ltd.
Takasago-shi, Hyogo 676-8686 (JP)

(74) Representative: Henkel, Feiler, Hänzel
Möhlstrasse 37
81675 München (DE)

(54) **GAS HYDRATE PRODUCTION DEVICE AND GAS HYDRATE DEHYDRATING DEVICE**

(57) The invention relates to a gas hydrate dewatering cooling and outputting apparatus which dewaters and solidifies gas hydrate slurry and takes out the solidified gas hydrate under ambient pressure. The apparatus comprises an output apparatus body 31 having a supply port 32 for the gas hydrate slurry on an upper part of a pressure vessel, a screw extruder 33 provided at a lower part inside the output apparatus body 31 and having a drain 37 and an outlet sealing device, and a cooling device 41 which cools the vicinity of the outlet 39 of the screw extruder 33. According to such a construction, slurry gas hydrate can be efficiently and continuously dewatered, cooled and solidified, and gas hydrate powder can be consolidated into blocks and taken out to the atmosphere.

FIG. 1

## Description

TECHNICAL FIELD

The present invention relates to a gas hydrate production apparatus for producing gas hydrate from a raw material gas such as natural gas, and to a gas hydrate dewatering apparatus for dewatering gas hydrate slurry.

BACKGROUND ART

As a method of storing and transporting natural gas composed mainly of hydrocarbons such as methane, at present, there is generally used a method in which natural gas is gathered from a gas field and cooled down to a liquefaction temperature, and then stored and transported in a state of liquefied natural gas (LNG). However, in the case of methane, for example, which is the main component of liquefied natural gas, a very low temperature such as $-162°C$ is required for liquefaction. In order to store and transport the liquefied natural gas while maintaining such a condition, a dedicated storage unit and a dedicated transportation means such as an LNG ship are required. Since production, maintenance and control of such equipment is costly, inexpensive storage and transportation methods replacing the above method has been earnestly studied.

As a result of such studies, a method in which natural gas is hydrated to generate a gas hydrate in a solid state (hereinafter referred to as "gas hydrate"), and the gas hydrate is then stored and transported in this solid state has been found, and this method is considered to be promising. With this method, the very low temperature condition as in the case of handling LNG is not required, and handling thereof is relatively easy due to its solid form. Therefore, for the storage unit or transportation device, one obtained by slightly improving an existing refrigeration unit or an existing container ship can be respectively utilized, and hence a considerable reduction in cost can be expected.

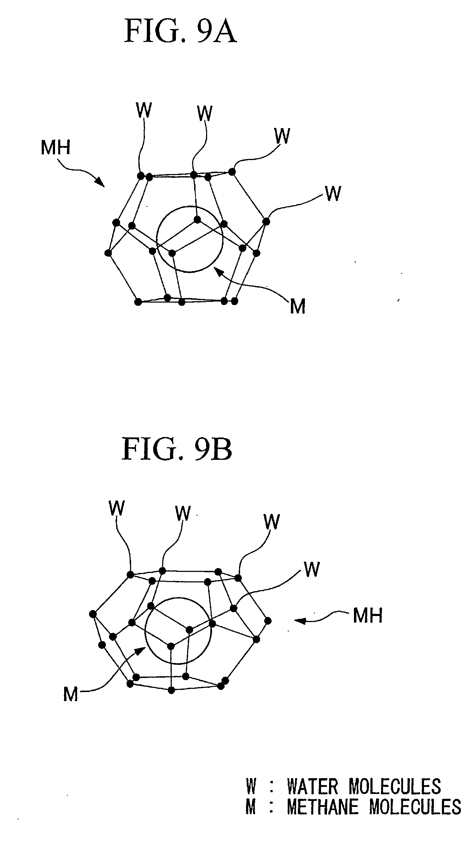

This gas hydrate is a kind of inclusion compound (clathrate compound), wherein as shown in FIG. 9A and FIG. 9B, molecules constituting each component of natural gas, that is, methane ($CH_4$), ethane ($C_2H_6$), propane ($C_3H_8$) and the like enter into a clathrate lattice (clathrate) in the form of a three-dimensional container formed of a plurality of water molecules ($H_2O$), to form a clathrate crystal structure. The intermolecular distance of elements constituting the natural gas included in the clathrate becomes shorter than the intermolecular distance in a gas cylinder when natural gas is filled under high pressure. This means that the natural gas can form a tightly filled solid, and for example, the natural gas can have a volume of about 1/190 of the volume in the gas state, under conditions in which, for example, methane hydrate can stably exist, that is, under conditions of $-30°C$ and at atmospheric pressure

($1kg/cm^2A$). As described above, the gas hydrate can be stored stably.

In this method, the natural gas after having been collected from the gas field, is subjected to an acid gas removal process, where acid gas such as carbon dioxide ($CO_2$) and hydrogen sulfide ($H_2S$) is removed, and is then temporarily stored in a gas storage section under low temperature and high pressure conditions. This natural gas is then hydrated in a hydrate forming process, to become gas hydrate. The gas hydrate is in a slurry form mixed with water, and in a subsequent dewatering process, unreacted mixed water is removed. The gas hydrate is then enclosed in a vessel such as a container under conditions adjusted to a predetermined temperature and pressure, through a cooling process and a decompression process, and is stored in a storage unit.

At the time of transportation, the natural gas stored in this container is loaded into a transportation means such as a container ship, and transported to its destination. After being unloaded at its destination, the gas hydrate is returned to the original state of natural gas through a hydrate decomposition process, and then transported to respective supply locations.

In the above described conventional processes from the generation of the gas hydrate to the transportation thereof, there are problems to be solved as described below.

(1) The process for generating gas hydrate is operated under a pressurized condition at a temperature around $0°C$ and up. However, if the generated gas hydrate is directly taken out under ambient pressure, it will decompose. Hence, it is necessary to first cool this to a low temperature of about $-30°C$ before taking it out under ambient pressure..

(2) In the gas hydrate generation plant, the gas hydrate immediately after generation is in a slurry form containing a large amount of water. Therefore, if the slurry gas hydrate is stored and transported directly or after being frozen, the efficiency of storage and transportation decreases due to the volume of water (ice), causing a cost increase. Hence, it is desired to dewater the slurry gas hydrate at low cost.

(3) The excess water contained in the slurry gas hydrate is phase-transformed to ice at a temperature below $0°C$, and adheres to the gas hydrate. Therefore, it is necessary to carry out low-temperature cooling for suppressing the decomposition as specified in (1), after dewatering the slurry gas hydrate.

(4) In a mass production process, it is necessary to reduce the production cost of gas hydrate. Therefore, it is desired to reduce as much as possible the size of large-capacity structures such as intermediate storage tanks which are necessarily costly to construct.

In view of the above problems of the related art, it is an object of the present invention to improve the production efficiency of gas hydrate and reduce various costs, by efficiently and continuously dewatering and cooling the generated slurry gas hydrate to solidify it, and then consolidating the gas hydrate powder into blocks and taking it out to the atmosphere.

DISCLOSURE OF THE INVENTION

A gas hydrate production apparatus according to a first aspect of the present invention is a gas hydrate production apparatus comprising; a gas hydrate generating reactor which generates gas hydrate slurry from a raw material gas, and a gas hydrate dewatering apparatus which dewaters the generated gas hydrate slurry. The gas hydrate dewatering apparatus comprises; a dewatering device which physically dewaters the generated gas hydrate slurry, and a hydration dewatering device which reacts water contained in the gas hydrate with the raw material gas to form hydrate, during a dewatering process by the dewatering device or after the dewatering.

A gas hydrate dewatering apparatus according to a second aspect of the present invention is a gas hydrate dewatering apparatus which dewaters and solidifies gas hydrate slurry supplied from a gas hydrate generating reactor and takes out the solidified gas hydrate under ambient pressure; and comprises; an output apparatus body having a supply port for the gas hydrate slurry on an upper part of a pressure vessel, a screw dewatering, compacting and molding device provided below the output apparatus body and having a drain and an outlet sealing device, and a cooling device which cools the vicinity of the outlet of the screw dewatering, compacting and molding device.

As the screw dewatering, compacting and molding device, a uniaxial or biaxial screw extruder can be used.

According to such a gas hydrate dewatering apparatus, gas hydrate slurry supplied to inside the takeout device is continuously dewatered, compacted and molded, by passing through the screw dewatering, compacting and molding device. Moreover, since gas hydrate cooled by a cooling device in the vicinity of the outlet is continuously taken out to the atmosphere, the size of a large-capacity structure such as an intermediate storage tank in a production plant can be reduced.

In the gas hydrate dewatering apparatus of the second aspect, a gas introducing pipe which supplies a raw material gas for forming gas hydrate may be provided in the screw dewatering, compacting and molding device of the output apparatus body.

According to such a gas hydrate dewatering apparatus, gas hydrate can be additionally generated in the output apparatus body, by a reaction between a large amount of water contained in the gas hydrate slurry and a gas hydrate-forming substance supplied from the pressurized gas introducing pipe.

A cutting device which cuts gas hydrate briquettes into predetermined lengths may be provided at an outlet of the screw dewatering, compacting and molding device. In this case, the outlet of the screw dewatering, compacting and molding device is preferably formed in a rectangular shape in cross-section.

According to such a gas hydrate dewatering apparatus, since the gas hydrate briquette which has been dewatered, compacted, molded and cooled by the screw dewatering, compacting and molding device and then taken out continuously, can be cut into a desired length, space efficiency in storage and transportation can be improved. Particularly, if the outlet is formed in a rectangular shape in cross-section, the gas hydrate can be stored and transported as a cube or rectangular block, thereby enabling further improvement in the space efficiency.

A dewatering device for dewatering excess water from the introduced gas hydrate slurry may be provided below the supply port.

In this case, the dewatering device preferably comprises either one or both of a dewatering screen and a mechanical dewatering apparatus which mechanically dewaters.

The mechanical dewatering apparatus is preferably a press dewaterer, and more preferably, press dewaterers arranged vertically in a plurality of stages. When such press dewaterers are used, preferably facing sluice plates are provided on opposite sides of the press dewaterer, and overflow channels with approximate centers of upper edges of the sluice plates located above the face of rollers cut out to drain dewatered excess water to the side are provided.

According to such a gas hydrate dewatering apparatus, the gas hydrate is supplied to the screw dewatering, compacting and molding device after having been subjected to primary dewatering by the dewatering device. Hence, dewatering can be performed efficiently.

The dewatering efficiency can be further improved, if the gas hydrate is made to pass through a dewatering screen as a primary dewatering device, and then through the mechanical dewatering device such as the press dewaterer.

By arranging the press dewaterers vertically in a plurality of stages, the dewatering efficiency can be further improved. Also, by providing the sluice plates on the opposite sides to form the overflow channel, the dewatered excess water can be drained without coming into contact with the gas hydrate.

A gas hydrate dewatering apparatus according to an other aspect of the present invention is a gas hydrate dewatering apparatus which dewaters gas hydrate slurry. This apparatus comprises: a container having an internal space for accommodating the gas hydrate, a gas supply device which supplies raw material gas before being hydrated, to the internal space, a cooling device which cools gas hydrate accommodated in the internal space, and a stirring device which stirs and brings the raw material gas into contact with gas hydrate in the internal space.

In this case, there may be provided a pressurized dewatering device which pressurizes and dewaters the gas hydrate slurry before being accommodated in the container.

The stirring device may comprise a plurality of shafts having spiral protrusions on side faces thereof, arranged in the internal space, and which are rotated individually to convey the gas hydrate.

The stirring device may have two shafts, and both shafts may be arranged parallel with each other, with the respective protrusions overlapping when viewed from the axial direction.

In such a gas hydrate dewatering apparatus, when a gas before being hydrated is brought into contact with the slurry gas hydrate, and is cooled while being stirred, the gas hydrate is moved in a complicated manner by the rotation of the plurality of shafts, to thereby continually renew the contact face with the gas. The gas is actively contacted at the renewed contact face, so that this reacts with water content adhered to the surface of the gas hydrate particles and is successively hydrated. As a result, the excess water is formed into hydrate and thus reduced, while the gas hydrate is increased by that amount.

The gas hydrate dewatering apparatus may further comprise; a detection device which detects a reaction condition of the gas hydrate accommodated in the internal space with gas, and an adjustment device which adjusts a gas supply amount according to the reaction condition.

In such a gas hydrate dewatering apparatus, the dewatering action by means of the hydration reaction is promoted by adjusting the gas supply amount, corresponding to the reaction condition between the remaining water content and the gas, such that when the reaction of the gas with water remaining in the gas hydrate proceeds to reduce the amount of the gas, the gas is then replenished.

The detection device may be provided on the container arranged in close proximity to an intake of the gas hydrate.

In such a gas hydrate dewatering apparatus, the reaction between the remaining water content and the gas proceeds faster and occurs more actively, with a higher pressure. Therefore, by arranging the detection device on the intake side where the pressure is comparatively low and the reaction occurs less easily, the reaction situation inside the container can be more accurately ascertained.

The output port of the gas hydrate provided in the container may be arranged at a lower position than the intake of the gas hydrate provided in the same container.

In such a gas hydrate dewatering apparatus, when the dewatered gas hydrate is extruded from the outlet port and exposed, then due to the effect of gravity, this drops one by one, or slides down so as to be taken out from the gas hydrate dewatering apparatus. Therefore dumping into a storage facility can be performed easily.

BRIEF DESCRIPTION OF DRAWINGS

FIG. 1 is a block diagram showing a first embodiment of a gas hydrate production apparatus according to the present invention.
FIG. 2 is a perspective view showing a configuration example of a press dewaterer installed in a gas hydrate dewatering apparatus of FIG 1.
FIG. 3 is a block diagram showing a configuration example of a gas hydrate production apparatus incorporating the gas hydrate dewatering apparatus of FIG 1.
FIG. 4A is an enlarged diagram of a spray device shown in FIG. 3, and FIG. 4B is a diagram showing an other embodiment of the spray device.
FIG. 5 is an equilibrium diagram of hydrate generation.
FIG. 6 is a block diagram showing a second embodiment of a gas hydrate dewatering apparatus according to the present invention.
FIG. 7 is a block diagram showing a configuration example of a gas hydrate production apparatus incorporating the gas hydrate dewatering apparatus of FIG 6.
FIG. 8 is a diagram illustrating a state inside a hydration dewatering apparatus.
FIG. 9A and FIG. 9B are diagrams showing the molecular structure of hydrate.

BEST MODE FOR CARRYING OUT THE INVENTION

Hereunder is a description of preferred embodiments of the present invention with reference to the drawings. The present invention however is not limited to the following respective embodiments, and for example associated components of these embodiments may be appropriately combined.

In these embodiments, the gas hydrate-forming substance is methane gas which is the main component of natural gas, and description is given consistently for an apparatus and method for producing methane hydrate. However, the gas hydrate forming substance is not limited to methane gas, and there is also for example ethane, propane, butane, krypton, xenon, and carbon dioxide.

Methane hydrate (MH), as shown in FIG. 9A and FIG. 9B, is one kind of clathrate compound (clathrate) with methane molecules M included in each of the cages formed with water molecules W arranged in three dimensions (for example a dodecahedron, or fourteen faced body), and this is generated for example based on the following reaction formula. Furthermore, when the methane hydrate MH is decomposed, this becomes, for one volume of methane hydrate, approximately 0.9 of water and approximately 170 of methane in the normal state.

$$CH_4 + 5.7\,H_2O \rightarrow CH_4 \cdot 5.7\,H_2O + \text{heat of hydration}$$

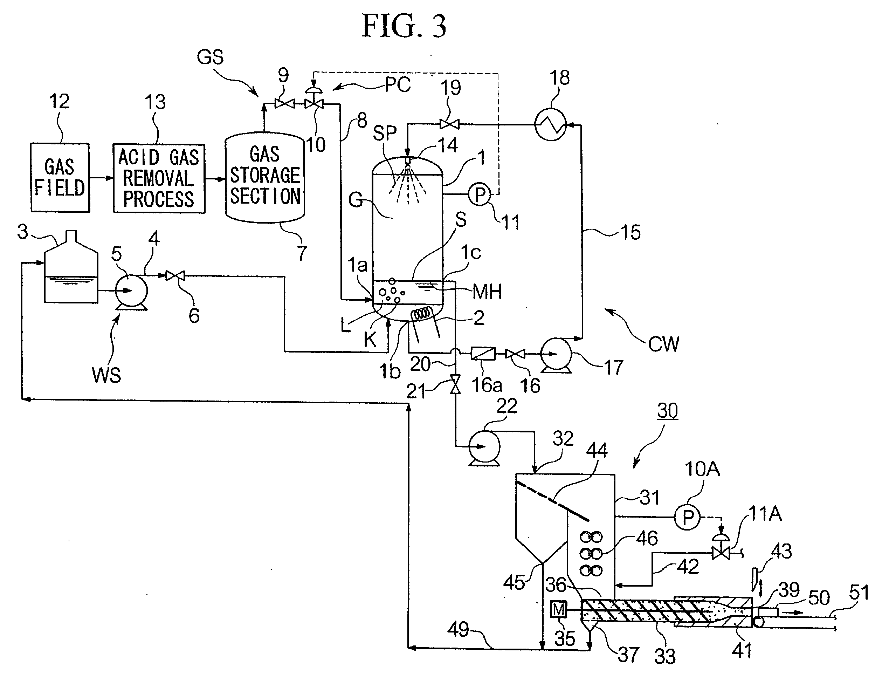

FIG. 3 is a block diagram showing a configuration example of a gas hydrate production apparatus incorporating a gas hydrate dewatering apparatus of the present invention.

In FIG. 3, reference symbol 1 denotes a sealed gas hydrate generating reactor. A cooling device (temperature control device) such as for example a cooling coil 2 is inserted into the gas hydrate generating reactor 1 being a pressure vessel. As a result, a later described aqueous phase L inside the gas hydrate generating reactor 1 can be cooled and held for instance at approximately 1°C, being within the gas hydrate generating temperature range (for example 1 to 5°C). When the gas hydrate is generated, heat of hydration is produced, but if the gas hydrate is not at a low temperature high-pressure state this will not be produced. Therefore, it is preferable to provided the cooling device inside the gas hydrate generating reactor 1 as described above, to continually cool this.

In the example shown in the figure, the cooling coil 2 is used as the cooling device, however the invention is of course not limited to this. For example, the gas hydrate generating reactor 1 may be surrounded by a cooling jacket, and brine may be supplied and circulated from a brine tank to this cooling jacket. Alternatively, a radiator may be inserted into the gas hydrate generating reactor 1. Moreover, these may be used in combination.

Reference symbol 3 denotes a water tank. By introducing water from inside the water tank 3 via piping 4 to inside the gas hydrate generating reactor 1, an aqueous phase L (liquid phase) can be formed inside the gas hydrate generating reactor 1. A water supply pump 5 and a valve 6 are arranged in the piping 4, to control the liquid level S of the aqueous phase L at a constant water level. A water supply device WS comprises the water tank 3, the piping 4 and the water supply pump 5.

A methane inlet 1a is provided on the lower side wall of the gas hydrate generating reactor 1. Methane gas (gas hydrate forming substance) is supplied to the methane inlet 1a via piping 8, from a gas storage section 7 serving as a methane supply source. A standard valve 9 and a flow control valve 10 are arranged in the piping 8. The opening of the flow control valve 10 is controlled by a pressure gauge 11 which detects the pressure of the gaseous phase G (methane gas) described later, inside the gas hydrate generating reactor 1. As a result, methane is filled to inside the gas hydrate generating reactor 1, and the pressure of the gaseous phase G can be continually maintained at the gas hydrate generating pressure (for example 40 atm.).

A methane supply device (gas hydrate forming substance supply device) GS comprises the gas storage section 7 and the piping 8 and so on, while a pressure control device PC inside the generating reactor comprises the pressure gauge 11 and the flow control valve 10.

The methane (natural gas composed mainly of methane) supplied to the gas storage section 7 is collected from a gas field 12, after which acid gas such as carbon dioxide, hydrogen sulfide and the like is removed via an acid gas removal process 13. This is then fed via a compressor in a low temperature high pressure condition to the gas storage section 7, where it is temporarily stored.

A water extraction port 1b for extracting unreacted water is provided at the bottom of the gas hydrate generating reactor 1. The unreacted water extracted through this water extraction port 1b is super cooled, and then again supplied to inside the gas hydrate generating reactor 1.

To explain in more detail, the water extraction port 1b is communicated with a spray nozzle 14 provided at the top of the gas hydrate generating reactor 1 by piping 15, and in this piping 15 there is sequentially provided a valve 16, a water circulating pump 17, a heat exchanger (chiller) 18 and a valve 19. The water extracted by the water circulating pump 17 is super cooled by the heat exchanger 18, and then supplied from the spray nozzle 14 in an atomized condition (refer to symbol SP) to inside the gaseous phase G (methane atmosphere) inside the gas hydrate generating reactor 1.

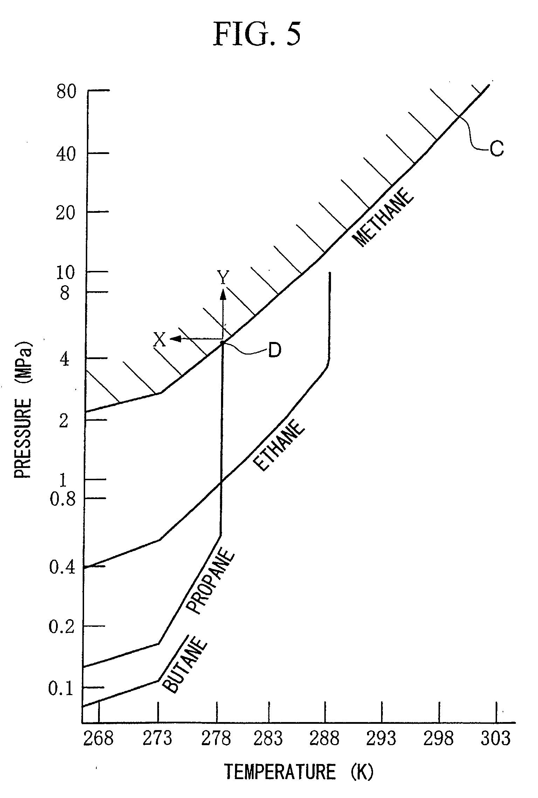

Super cooling, as shown in FIG. 5, is a condition where at least the temperature is lower (in the direction of arrow X) or the pressure is higher (in the direction of arrow Y) than for an arbitrary point D on a generation equilibrium line C for methane hydrate. The region above this generation equilibrium line C (for convenience sake the region shown by oblique lines) is the methane hydrate generating region (under methane hydrate generating conditions). In the illustration, the ethane, propane and butane generation equilibrium lines are also shown.

As the heat exchanger (chiller) 18, there may be used for example a multi-pipe heat exchanger with excellent thermal conduction efficiency, a coil type heat exchanger with a simple construction, or a plate type heat exchanger which has excellent heat conduction efficiency, and for which maintenance is simple. The super cooled water circulation device CW comprises the water circulating pump 17, the piping 15 and the heat exchanger 18.

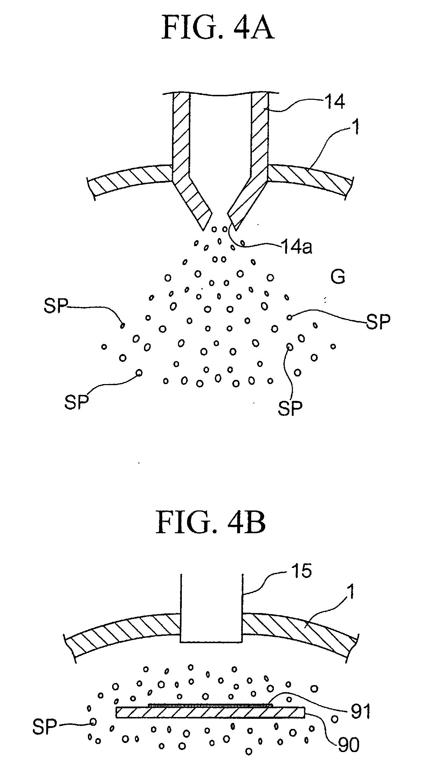

The spray nozzle 14, as shown in FIG. 4A, is provided facing downwards at the top of the gas hydrate generating reactor 1, and water particles SP of an average of several microns in outside diameter (theoretically, the particle diameter should be small) are sprayed towards the gaseous phase G from the nozzle 14a of the spray nozzle 14. In this way, water is sprayed into the gaseous phase G, so that a large number of water particles SP are formed, thereby enabling the surface area of the water per unit volume, that is the contact surface area with the gaseous phase G, to be significantly increased.

In the case where in the above manner, the unreacted water ejected from the bottom of the gas hydrate generating reactor 1 is sprayed to inside of the gas hydrate generating reactor 1 from the spray nozzle 14, it is important that blockages do not occur in the spray nozzle 14 due to foreign matter. Therefore preferably a filter 16a for filtering out foreign matter such as gas hydrate etc. is provided in the piping 15, so that foreign matter can be reliably removed from the extracted unreacted water. The spray device of FIG. 4B will be described later.

A solution layer extraction port 1c is provided near the liquid level S of the aqueous phase L of the gas hydrate generating reactor 1, and this solution layer extraction port 1c is connected to a later described gas hydrate dewatering apparatus 30 by means of piping 20. In the piping 20 there is arranged as necessary, a valve 21, an extraction pump 22 and so forth.

With such a construction, a methane hydrate layer MH of comparatively low density floating on the liquid surface S is drawn into the extraction pump 22 from the solution layer extraction port 1c and discharged to the piping 20. Therefore the methane hydrate and water become a slurry state and are transferred through the piping 20 to a subsequent process. That is to say, the methane hydrate slurry (gas hydrate slurry) generated by the gas hydrate generating reactor can be easily supplied to a subsequent process gas hydrate dewatering apparatus 30 by flowing this together with the surplus water.

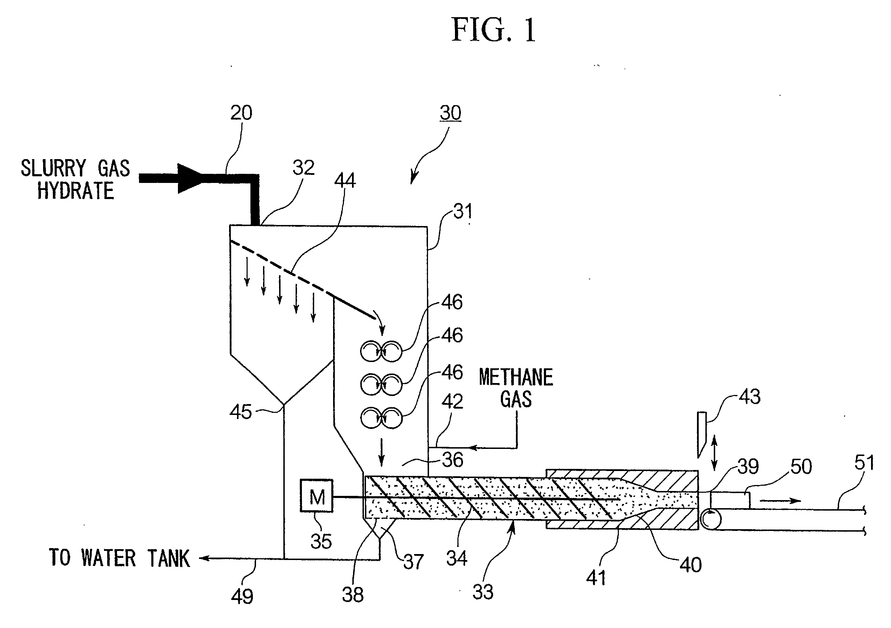

Next, the construction of the gas hydrate dewatering apparatus 30 according to the present invention will be described in detail based on FIG. 1.

This gas hydrate dewatering apparatus (hereunder dewatering apparatus) 30 is an apparatus for dewatering and solidifying the methane hydrate slurry supplied from the above mentioned gas hydrate generating reactor 1, and taking this out under atmospheric pressure. An output apparatus body 31 of the dewatering apparatus 30 is a pressure vessel. A supply port 32 which receives methane hydrate slurry is provided at an upper part with the piping 20 connected thereto.

At a lower part inside the output apparatus body 31 there is provided a screw extruder 33 as a screw dewatering, compacting and molding device. This screw extruder 33 has a function of force feeding methane hydrate slurry which has been introduced from an inlet 36 provided opening upwards where the supply port 32 exists, in an extrusion direction (from the left to the right of the page in the figure), by rotating a screw 34 inside a casing by means of a motor 35 of a driving device. For this screw extruder 33, there may be adopted one where the screw 34 is a single spindle type, or one where the screw 34 is a multi-spindle type of two or more spindles.

A screen 38 through which water easily passes but methane hydrate does not easily pass is fitted to a drain 37 provided below the inlet 36. Piping 49 for leading surplus water to the water tank 3 is connected to the drain 37.

Furthermore, a squeezing/compacting and molding portion 40 with a cross-section shape of the casing gradually reducing, and an outlet sealing device (not shown in the figure) are provided before an outlet 39. As a result, the force fed methane hydrate slurry is dewatered and compacted, and molded into a shape of the discharge port cross-section, and continuously extruded to the atmospheric from the outlet 39. The outlet sealing device provided here, is one which as necessary, seals the outlet 39 which is the outlet for the output apparatus body 31 being a pressure vessel, and may involve for example a sealed hatch or the like. This outlet sealing device is closed up until the operation of the screw extruder 33 starts and stable operation is reached, that is, up until the fed methane gas realizes a sealing function as an outlet valve for the output apparatus body 31 being a pressure vessel.

A cooling device 41 for cooling the dewatered, compacted and molded methane hydrate is provided in the vicinity of the outlet 39 of the screw extruder 33. This cooling device 41 may be a cooling jacket fitted so as to cover the outer periphery of the compacting and molding section 40 and the casing, from the outlet 39 of the screw extruder 33, or one which cools from the inside by using the shaft of the screw extruder 33 to introduce refrigerant to the outlet 39 side, or may be a combination of both.

The refrigerant used may be used in common with the above mentioned cooling device of the gas hydrate generating reactor 1, however other heat and cold existing in the vicinity of the gas hydrate generating reactor 1 such as natural gas may be introduced and used.

If the dewatering apparatus 30 incorporates the above mentioned output apparatus body 31, the screw extruder 33 and the cooling device 41, then the methane hydrate slurry can be dewatered, compacted and molded with the screw extruder 33 and cooled with the cooling device 41, and then taken out continuously under atmospheric pressure as methane hydrate briquettes (gas hydrate briquettes) having a cross-section shape of the outlet 39, that is as long briquettes with the methane hydrate powder compacted.

In order to further improve the performance of the dewatering apparatus 30, then in the example as shown in FIG. 1, a pressurized gas introducing pipe 42 is connected above the screw extruder 33 of the output apparatus body 31. This pressurized gas introducing pipe 42 forcefully supplies methane gas being the raw material gas necessary for forming methane gas hydrate, to inside the output apparatus body 31 which is held at a high pressure.

When methane hydrate is generated inside the dewatering apparatus 30, since the gaseous methane becomes solid methane hydrate, the internal pressure drops. However, for high speed generation of the methane hydrate, the internal conditions of the dewatering apparatus 30 must be a low temperature and high pressure. Therefore in order to cancel the pressure drop of the dewatering apparatus 30 with the generation of the methane hydrate, the pressure inside the dewatering apparatus 30 is continuously detected by a pressure gage 11A, and based on this, the opening of a flow control valve 10A is continuously controlled. As a result, a necessary amount of methane gas is replenished to inside the dewatering apparatus 30, to maintain the interior of the dewatering apparatus 30 at a constant high pressure condition, so that high speed generation of methane hydrate is achieved.

In the dewatering apparatus 30, in order to promote generation of gas hydrate inside the output apparatus body 31, then preferably cooling devices are separately provided for both the screw 34 and a press dewaterer 46. Furthermore, preferably the methane gas supplied to the output apparatus body 31 uses methane gas stored in the gas storage section 7 and brought in by piping or the like.

Moreover, a cutting device 43 for cutting into predetermined lengths the long methane hydrate briquettes which have been continuously extruded to the atmosphere, is provided at the outlet 39 of the screw extruder 33. This cutting device 43 may adopt for example a cutter which moves vertically along the outlet 39, so that the methane hydrate briquettes can be cut to an appropriate length for storage or transport.

Considering such storage and transport, the cross-section shape of the outlet 39 is preferably a rectangular shape rather than for example a circular, oval, or polygon shape. This is because, by making the outlet 39 a rectangular cross-section, a long rectangular solid methane hydrate briquette is continuously discharged. Therefore if this is cut to suitable lengths, a rectangular solid or cube of an appropriate size results, which can be piled up for storage and transport without giving waste space.

In the example of the figures, in order to also efficiently remove surplus water from the methane hydrate slurry, a dewatering screen 44 is provided beneath the supply port 32 as a primary dewatering device. This dewatering screen uses for example a mesh like material through which water passes easily but methane hydrate does not pass easily. This is installed at an incline such that the methane hydrate slurry falling from the supply port 32 is guided towards the inlet 36 of the screw extruder 33. A drain 45 is provided below the dewatering screen 44, and the piping 49 connected to the water tank 3 is connected to the drain 45.

As a result, regarding the methane hydrate slurry falling onto the dewatering screen 44, the separated surplus water which passes through the dewatering screen 44 is drained from the drain 45, while the methane hydrate and the water content remaining on the dewatering screen 44 falls towards the inlet 36 from the lower end of the inclined face. Consequently, the surplus water is reduced by the amount which has passed through the dewatering screen 44, giving a methane hydrate slurry with a reduced surplus water content.

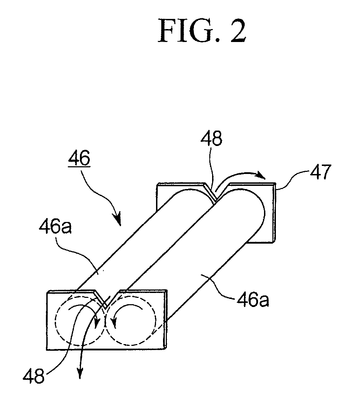

In the example of the figure, as a secondary dewatering device for dewatering the methane hydrate slurry which falls from the dewatering screen 44, there is installed the press dewaterer 46 above the inlet 36. This press dewaterer 46, as shown in FIG. 2, is constructed such that when the methane hydrate slurry passes between a pair of rollers 46a, the surplus water is removed by compressive force. Here a three stage press dewaterer 46 is arranged vertically, however the number of installed stages may be appropriately selected based on a variety of conditions.

Furthermore, as shown in FIG. 2, facing sluice plates 47 are provided on opposite sides of the press dewaterer 46, and V-shape notches 48 are provided on the upper edges of the sluice plates 47 located above the upper face of the rollers 46a, to form overflow channels. These notches 48 should be provided aligned with the center of the sluice plates 47 coinciding approximately with the position where the pair of rollers 46a contact. As a result, surplus water which has been removed and collects above the rollers 46a, preferentially drains to both sides from the notches 48 which are lowermost in the sluice plates 47 on the side faces. Therefore remixing of the dewatered methane hydrate falling directly below the rollers 46a with the drain water, and a resultant reduction in dewatering efficiency can be prevented. The surplus water drained from the notches 48 is guided to the piping 49 from an outlet (omitted from the figure) provided adjacent to the inlet 36.

In the example of the figure, the water removal screen 44 which removes water using gravity acting on the surplus water, and the three stage press dewaterer 46 which mechanically removes water from the gas hydrate which contains surplus water, are used in common as a physical dewatering apparatus. However depending on conditions, one or other of the dewatering screen 44 and the press dewaterer 46 alone may be installed. Furthermore, instead of the press dewaterer 46, for example a centrifugal type dewaterer may be used as a mechanical dewatering apparatus.

Next is a description of the operation of the above described gas hydrate production apparatus, that is, a production method for gas hydrate.

Beforehand, the air inside the gas hydrate generating reactor 1 is replaced with methane gas. Then aqueous phase L is introduced from the water tank 3 to inside the gas hydrate generating reactor 1 so that the surface of the liquid S is above the solution layer extraction port 1c. This liquid phase L may contain a stabilizing agent if necessary. Next, the aqueous phase L inside the gas hydrate generating reactor 1 is cooled by the cooling coil 2 to a predetermined temperature of for example approximately 1°C, after which temperature control is performed to maintain this temperature.

Once the temperature of the aqueous phase L has stabilized at the predetermined temperature, methane inside the gas storage section 7 is continuously introduced as bubbles K from the methane inlet 1a. As a result, at least a part of the methane is absorbed into the aqueous phase L from the gas-liquid interface of the bubbles K, and reacted with the water and converted to methane hydrate (hydration). The methane hydrate MH generated by the reaction floats on the aqueous phase L since the density thereof is less than that of water, and forms a layer on the liquid surface S. This methane hydrate layer MH is taken out by the extraction pump 22 from the liquid layer extraction port 1c, and delivered through the piping 20 to the dewatering apparatus 30. At this time, since the methane hydrate is recovered together with water, this becomes a slurry. With the extraction of the methane hydrate layer MH from the solution layer extraction port 1c, the liquid surface of the aqueous phase L drops. Therefore, in order to maintain the level of the liquid surface S constant, new water is replenished to inside the gas hydrate generating reactor 1 via the water supply pump 5 from the water tank 3.

When the methane hydrate MH is generated inside the gas hydrate generating reactor 1, since the gaseous methane becomes a solid methane hydrate MH, the internal pressure drops. However, for high speed generation of the methane hydrate, the internal conditions of the gas hydrate generating reactor 1 must be a low temperature and a high pressure. Therefore, in order to cancel the pressure drop of the gas hydrate generating reactor 1 with the generation of the methane hydrate, the pressure inside the gas hydrate generating reactor 1 is continuously detected by the pressure gauge 11, and based on this, the opening of the flow control valve 10 is continuously controlled. As a result, a necessary amount of raw material methane is replenished to inside the gas hydrate generating reactor 1, to maintain the interior of the gas hydrate generating reactor 1 at a constant high pressure condition, so that high speed generation of methane hydrate is achieved.

On the other hand, the unreacted methane gas which is not absorbed into the aqueous phase L is released from the liquid surface S and remains as the gaseous phase G inside the gas hydrate generating reactor 1. The unreacted water is extracted from the bottom of the gas hydrate generating reactor 1, and this is super cooled by the heat exchanger 18 and then sprayed to inside the gas hydrate generating reactor 1 by the spray nozzle 14. In this way, super cooled water particles SP are released in large quantities into the methane gas filled inside the gas hydrate generating reactor 1. Since the contact surface area per unit volume of water particles SP for contact with methane gas is increased significantly giving immediate hydration, the methane hydrate is generated at high speed. This generated methane hydrate falls onto the liquid surface S, and is collected as described above. When the methane hydrate MH is generated inside the gas hydrate generating reactor 1, a large amount of heat of hydration is produced. However, for high speed generation of the methane hydrate MH, the internal conditions of the hydrate generating reactor 1 must be a low temperature and high pressure. Therefore, the discharge of the super cooled water particles SP to inside the gas hydrate generating reactor 1 also effectively removes the heat of hydration.

In the case where the gas hydrate generating reactor 1 is a large size, there is the possibility of the water at the bottom becoming super cooled. Hence this water may be taken out directly, that is, this may be sprayed to the top of the gas hydrate generating reactor 1 as is, without cooling.

In the above described embodiment, the methane gas bubbles K rise up through the aqueous phase L. Therefore, the bubble interface can always come in contact with new water particles without being covered by highly viscous reaction product, so that reaction is promoted. By continuing this operation in a stabilized condition, high density methane hydrate can be efficiently and continuously supplied to the dewatering apparatus 30.

If the particle diameter of the water particles SP sprayed from the spray nozzle 14 is large, since the methane hydrate generated on the surface of these water particles obstructs the methane supply, then the whole of the water particle SP cannot become methane hydrate. Therefore, gas is blown together with the water from the spray nozzle 14, so that the particle size of the water particles SP can be made fine at around an average of 10 μm. Furthermore, the number of spray nozzles 14 is not limited to one, and a plurality may be provided.

Moreover, as another method for making the particle size of the water particles fine at around an average of 10 μm, an ultrasonic vibration plate 90 as shown in FIG. 4B may be provided in the upper part inside the gas hydrate generating reactor 1, and super cooled water may be supplied from a pipe 15 above the ultrasonic vibration plate 90 to form a water pillow 91, so that the water particles SP are discharged from the water pillow 91 due to ultrasonic vibration. In this case, as well as the particle size of the water particles SP becoming more uniform, negative effects due to the before mentioned blowing of gas do not arise.

In general, the reaction of methane and water progresses for example at a reaction temperature of 1°C and a pressure of 40 atm. or more. Consequently, a high pressure container which can withstand at least 40 atm is necessary for the gas hydrate generating reactor 1. In the case where the reaction is carried out on the higher temperature lower pressure side, then it is preferable to add a stabilizing agent to the aqueous phase L. As an example of a stabilizing agent which shifts the methane hydration to the higher temperature low pressure side, there can be given for example: the aliphatic amino group such as isobutyl amine or isopropyl amine; the alicyclic ethyl group such as 1,3-dioxolane, tetra hydrofuran or furan: the alicyclic ketone group such as cyclobutanone or cyclopentanone: or the aliphatic ketone group such as acetone. It is considered that since all of these stabilizing agents have a hydrocarbon group and a polar group inside the molecule, the polar group attracts the water molecule while the hydrocarbon group attracts the methane molecule, so that the intermolecular distance is shortened and dewatering is promoted. For example, by adding an aliphatic amino group, reaction at $10°C$ and $20 kg/cm^2G$ becomes possible, and by adding tetrahydrofuran, reaction at $10°C$ and less than $10 kg/cm^2G$ becomes possible. These stabilizing agents are preferably added within a range of 0.1 to 10 moles per 1000 g of pure water.

The reaction temperature should be as low as possible but above the freezing point of the aqueous phase L in the relation of the aforementioned generation equilibrium. For example, preferably the aqueous phase temperature in the gas hydrate generating reactor 1 is controlled to be within a range of from 1 to $5°C$. In this way, the solubility of methane in water can be increased, and the generation equilibrium pressure can be reduced. The generation reaction for the methane hydrate is an exothermic reaction, and when the reaction in the gas hydrate generating reactor 1 starts, the system internal temperature increases due to the heat of hydration. Therefore preferably temperature control is performed to keep the temperature inside the system always within a predetermined range.

The methane hydrate slurry efficiently generated in this manner and supplied to the dewatering apparatus 30 is initially subjected to primary dewatering by the dewatering screen 44, and is then subjected to secondary dewatering by sequentially passing through the three stage press dewaterer 46. The surplus water removed by the dewatering screen 44 and the press dewaterer 46 is passed through the piping 49 and returned to the water tank 3. As a result, the methane hydrate slurry which is introduced to the screw extruder 33 from the inlet 36 has had most of its water content removed.

Furthermore, when the methane gas which has been added by the pressurized gas introducing pipe 42 is supplied, this methane gas and the surplus water are reacted, and methane hydrate is generated. Therefore the generation amount of methane hydrate is increased, and the amount of surplus water can be reduced by the amount used in the generation. Consequently, the pressure resistance also of the output apparatus body 31 being a pressure vessel, is preferably made the same as for the pressure resistant design of the above mentioned gas hydrate generating reactor 1.

A brief description is now given of the operation of the screw extruder 33 at the time of commencing drive. This screw extruder 33 closes an outlet sealing device (not shown in the figure) at the time of commencing drive, thereby sealing the outlet 39 which is the outlet for the output apparatus body 31 being a pressure vessel. When in this condition the screw extruder 33 is driven, the surplus water content contained in the methane hydrate slurry is further removed, and the solid (powder) methane hydrate is compacted and molded inside the casing. Furthermore, since this is cooled to a predetermined temperature ($- 30°C$ approximately) by the cooling device 41, then even if this is taken out to the atmosphere there is no concern about decomposition of the methane hydrate briquette.

Since the outlet 39 is closed, the methane hydrate is pushed towards the outlet 39 side where it accumulates, and finally the interior of the casing is filled with the methane hydrate briquette which is compacted and molded, and cooled. As a result, the outlet 39 can be sealed up due to the friction force caused by the methane hydrate briquette which is filled up inside the screw extruder 33.

Once such a condition results, if the drive of the screw extruder 33 continues with the outlet sealing device open, the methane hydrate briquette is continuously extruded to the atmosphere from the outlet 39, so that a long length methane hydrate briquette having a cross-section shape of the outlet 39 can be taken out. If the cross-section of the outlet 39 is made a rectangular cross-section, and the briquette is sequentially cut at appropriate lengths by the cutting device 43, then blocks 50 of methane hydrate briquette molded in a rectangular solid or a cubic shape can be continuously formed.

The blocks 50 of methane hydrate formed in this manner are conveyed to a predetermined storage facility by a conveying means such as a belt conveyor 51. The methane hydrate blocks 50 are not only easily handled compared to slurry or powder, but these are approximately half the volume of powder which contains air. Furthermore, these can be efficiently stacked in a transportation means such as a storage facility or a container without forming wasted space.

Next is a description of a second embodiment of the present invention with reference to the drawings. Components already described for the first embodiment are denoted by the same reference symbols and description thereof is omitted.

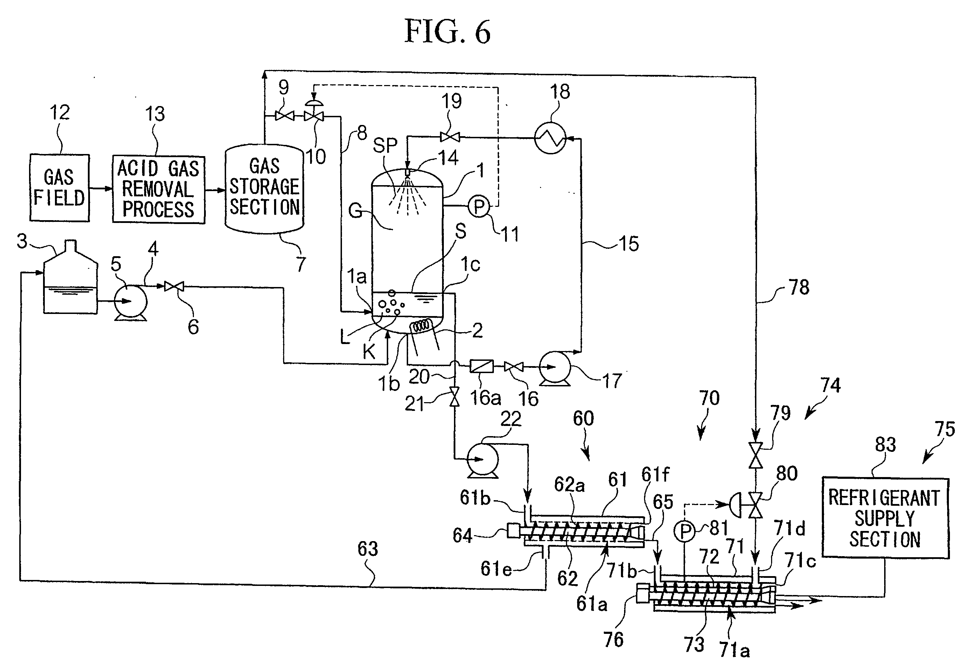

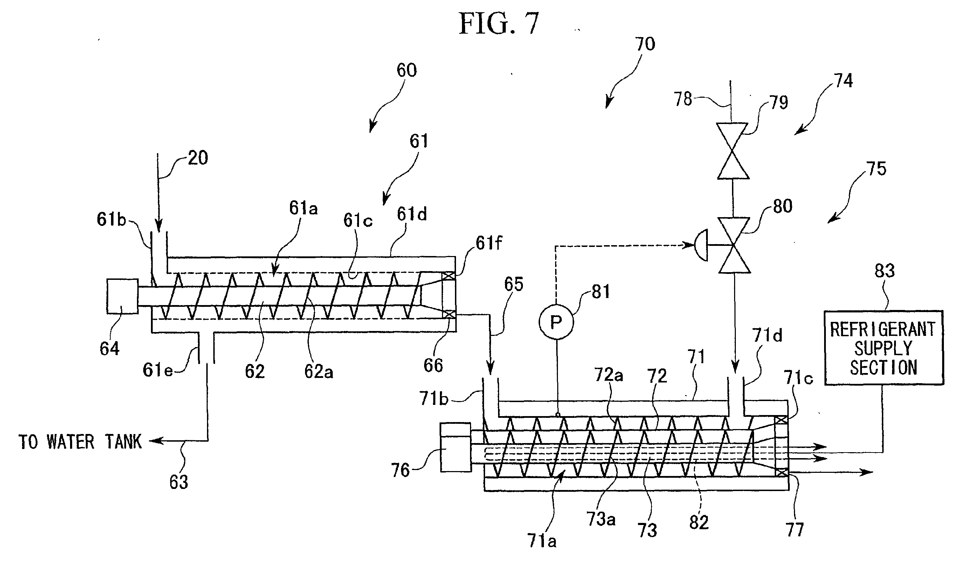

A gas hydrate dewatering apparatus shown in FIG. 6 and FIG. 7 (hereunder dewatering apparatus) comprises a pressure dewatering apparatus 60 which pressurizes and dewaters gas hydrate generated in a slurry state in a gas hydrate generating reactor 1, and a hydration and dewatering apparatus 70 which reacts methane gas with the water content remaining in the gas hydrate which has been physically dewatered, to make this into a hydrate.

The pressure dewatering apparatus 60 is in the form of a so called screw press, and comprises a container 61 having an internal space 61a of a cylindrical shape, and a shaft 62 arranged in the internal space 61a, and having spiral protrusion 62a on a side face thereof.

At a tip end of the container 61 there is provided an inlet 61b for taking in to the internal space 61a, the gas hydrate generated in a slurry state in the gas hydrate generating reactor 1. The beforementioned piping 20 is connected to the inlet 61b. The container 61 is of a two layer construction with an inner wall 61c forming the internal space 61a, and a casing 61d constituting an outside shell. The inner wall 61c is made of mesh, and a drain 61e is provided in the casing 61d for draining water which has accumulated thereinside. The drain 61e is connected to the water tank 3 via piping 63.

The shaft 62 is arranged with the protrusion 62a adjacent to the inner face of the internal space 61a, and is supported so as to be rotatable in a predetermined direction about its own axis, and is rotated by means of a drive section 64.

On the outlet end of the container 61 there is provided an output port 61f for taking out the gas hydrate which has been conveyed by rotation of the shaft 62. The output port 61f is connected to the later stage hydration and dewatering apparatus 70 via piping 65. Furthermore, a seal member 66 is arranged between the output port 61f and the shaft 62.

The hydration and dewatering apparatus 70 is in the form of a screw conveyor and comprises; a container 71 having a cylindrical internal space 71a with an elliptical cross-section, two shafts (stirring devices) 72 and 73 having spiral protrusions 72a and 73a on the side faces thereof, arranged in the internal space 71a, and which are rotated individually to convey the gas hydrate, a gas supply device 74 for supplying methane gas to the internal space 71a, and a cooling device 75 for cooling the gas hydrate which is accommodated in the internal space 71a.

At the tip end of the container 71 there is provided an intake 71b for taking in gas hydrate which has been pressurized and dewatered in the pressure dewatering apparatus 60. The above mentioned piping 65 is connected to the intake 71b.

The shafts 72 and 73 are arranged in parallel and with the respective protrusions 72a and 73 overlapping when viewed from the axial direction. Furthermore, these are arranged with the respective protrusions 72a and 73a adjacent to the inner face of the internal space 71a, and are supported as to be rotatable about their own axis, and are rotated by means of a drive section 76. The rotation directions of the two shafts may be the same direction, or opposite directions.

On the outlet end of the container 71 there is provided an output port 71c for taking out the gas hydrate which has been conveyed by rotation of the shafts 72 and 73. Furthermore, a seal member 77 is arranged between the output port 71c and the shafts 72 and 73.

A gas supply port 71d for supplying methane gas to the internal space 71a, is provided on the side face of the container 71 near the output port 71c. The gas supply port 71d is connected to the gas storage section 7 via piping 78 which is branched from piping 8. A valve 79 and a flow control valve (adjustment device) 80 are disposed in the piping 78, to thereby constitute the gas supply device 74.

On the other hand, a pressure gauge (detection device) 81 is installed in the interior of the container 71 near the intake 71b, for detecting the pressure of the internal space 71a, and the opening of the control valve 80 is controlled based on measurements of the pressure gauge 81 so as to replenish the natural gas inside the internal space 71a to thereby maintain the pressure thereinside always at the generating pressure (for example 40 atm).

Inside each of the shafts 72 and 73 there is formed a passage 82 of double tube structure turning back on itself in the axial direction. A refrigerant supply section 83 is connected to the passages 82, to thereby constitute the cooling device 75. Composition controlled propane is introduced as a refrigerant to inside the passages 82, and is taken out from the outside to thereby cool the gas hydrate accommodated in the internal space 71a.

Next is a description of a dewatering operation using the dewatering apparatus of the above described construction.

The gas hydrate slurry supplied through the piping 20 to the pressure dewatering apparatus 60 passes through the inlet 61b and is accommodated in the internal space 61a. This is then conveyed in the axial direction by rotation of the shaft 62, and due to being pressurized in this process is dewatered. The water content which is removed from the gas hydrate passes through the mesh of the inner wall 61c and collects in the interior of the casing 61d, and is guided through the piping 63 from the drain 61e, to the water tank 3.

On the other hand, the hydrate which has been pressurized and dewatered with rotation of the shaft 62 is passed through the output port 61f and taken out from the pressure dewatering apparatus 60, and supplied through the piping 65 to the hydration and dewatering apparatus 70.

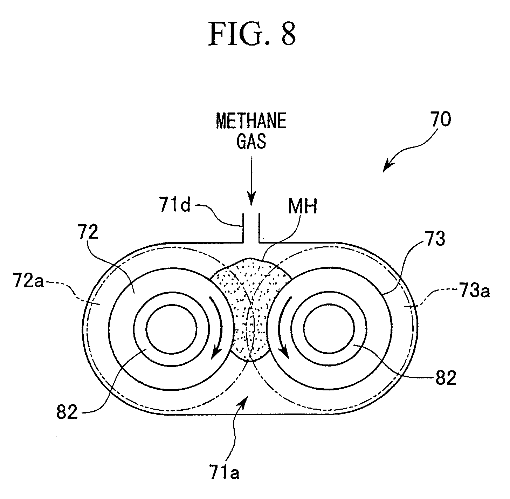

The gas hydrate which has been supplied to the hydration and dewatering apparatus 70 passes through the intake 71b and is accommodated in the internal space 71a, and due to the rotation of the shafts 72 and 73 is conveyed in the axial direction. In this process the gas hydrate is contacted with methane gas and is mixed with this and cooled, so that the residual water content and the methane gas are reacted to give the hydrate. To explain in more detail with reference to FIG. 8, in the process of conveying the gas hydrate, unhydrated methane gas passes from the gas storage section 7 to the gas supply port 71d and is supplied under pressure to the internal space 71a, and the interior of the internal space 71a is maintained at the above mentioned generating temperature. In this atmosphere, the gas hydrate is moved in a complicated manner by the rotation of the shafts 72 and 73, so that this moves with the contact surface with the unhydrated methane gas being continually renewed. The unhydrated methane gas is actively contacted at the renewed contact surface, so that this reacts with the water content adhered to the surface of the gas hydrate particles and is successively hydrated. The hydration in this case is accompanied by heating. However by cooling the shafts 72 and 73 by passing propane through the respective passages 82, heat recovery is effected, so that the temperature inside the internal space 71a is always maintained constant. Incidentally, when the methane gas is hydrated, the volume decreases sharply, and hence the internal pressure of the internal space 71a drops rapidly. When this internal pressure drop is detected by the pressure gauge 81, the opening of the control valve 80 is controlled to replenish natural gas to the internal space 71a so that the internal pressure is maintained at the generating pressure.

The gas hydrate accommodated in the internal space 71a, on reaching the output port 71c has had practically all its residual water content eliminated by hydration with the unhydrated methane gas. As a result, the gas hydrate is taken out from the hydration and dewatering apparatus 70, increased by that amount. The taken out gas hydrate is accommodated in a special purpose shipping container (not shown in the figure) and then stored or transported.

According to the dewatering apparatus constructed as described above, the gas hydrate slurry is physically dewatered using the pressure dewatering apparatus 60, and the gas hydrate which has been dewatered to a certain extent is chemically dewatered using the hydration and dewatering apparatus 70 so that the remaining water content and the methane gas are hydrated. As a result, the gas hydrate slurry can be efficiently dewatered, and the water content can be considerably reduced.

In the hydration and dewatering apparatus 70, if the reaction with the remaining water content in the gas hydrate is promoted so that the gas is reduced, then this is detected and methane gas is replenished to the internal space 71a, so that dewatering due to hydration occurs constantly and the drop in water content can be promoted. Incidentally, the reaction of the remaining water content and the gas, proceeds faster and occurs more actively with a higher pressure. Therefore, by arranging the pressure gauge 81 on the intake 71b side where the pressure is comparatively low and the reaction occurs less easily, the reaction situation inside the container 71 can be more accurately ascertained. Hence the supply of methane gas to the container 71 can be executed in an amount corresponding to the reaction situation.

Furthermore, in the hydration and dewatering apparatus 70, by making the passage 82 for the refrigerant flow of the shafts 72 and 73 in a doubled tube construction, and introducing propane gas to the inside of the passage 82 and taking this out from the outside, then the thermal energy of the propane gas serving as a refrigerant is used without waste, so that the gas hydrate can be efficiently cooled.

Incidentally, in this embodiment, the example is shown of where the container 71 and the shafts 72 and 73 of the hydration and dewatering apparatus 70 are arranged horizontally. However, as another embodiment, the container 71 and the shafts 72 and 73 may be arranged vertically so that the gas hydrate output port 71c is lower than the intake 71b, or these may be arranged at an incline. By so doing, when the dewatered gas hydrate is extruded from output port 71c and exposed, then due to the effect of gravity, this drops one by one, or slides down so as to be taken out from the hydration and dewatering apparatus 70. Therefore dumping onto a later stage waiting shipping container can be performed easily.

Furthermore, in this embodiment, two shafts 72 and 73 are installed in the hydration and dewatering apparatus 70, however the number of shafts is not limited to two, and this may be three or more without any problem.

INDUSTRIAL APPLICABILITY

The present invention demonstrates the following excellent industrial effects.

(1) By means of a single pressure vessel, a gas hydrate slurry can be dewatered, compacted, molded and cooled and then taken out continuously under atmospheric pressure in gas hydrate briquette form. Therefore, the number of pressure vessels in a gas hydrate production plant can be reduced, and construction costs for the equipment can be lowered. Hence, due to the significant drop in initial costs, the gas hydrate production costs can be greatly reduced.

(2) Gas hydrate with powder compacted into block form which is easy to handle and has excellent volumetric efficiency, can be continuously produced. Therefore, in particular from space considerations, the efficiency of storage and transport can be significantly improved, which in this respect can contribute significantly to a reduction in cost.

(3) By introducing pressurized gas of a gas hydrate forming substance to inside the output apparatus body, the remaining surplus water content can be subjected to an additional reaction to generate gas hydrate. Therefore, the generation amount of gas hydrate can be increased, and the residual water content can be reduced.

(4) Since multi-stage dewatering can be continuously executed; primary dewatering by means of the dewatering screw, secondary dewatering by means of the mechanical type dewaterer such as the press dewaterer, and then final dewatering by means of the screw dewatering, compacting and molding device, gas hydrate with a high dewatering ratio can be produced. Consequently, gas hydrate for which the water content is extremely low can be produced, and in particular enlargement of the gas hydrate briquette volume with freezing of the water content due to this becoming a low temperature of around -30°C can be prevented.

(5) For gas hydrate which has been dewatered to a certain extent, then by chemically dewatering by hydration of the remaining water content and the gas which has not yet been hydrated, the gas hydrate slurry can be efficiently dewatered, and the water content can be considerably reduced. As a result, the cost for storage or transport of the gas hydrate can be greatly reduced.

**Claims**

1. A gas hydrate production apparatus comprising:

   a gas hydrate generating reactor which generates gas hydrate slurry from a raw material gas; and
   a gas hydrate dewatering apparatus which dewaters the generated gas hydrate slurry,

   wherein said gas hydrate dewatering apparatus comprises:

   a physical dewatering device which physically dewaters the generated gas hydrate slurry; and
   a hydration dewatering device which reacts water contained in the gas hydrate with the raw material gas to form hydrate, during a dewatering process by the physical dewatering device or after the dewatering.

2. A gas hydrate dewatering apparatus which dewaters and solidifies gas hydrate slurry supplied from a gas hydrate generating reactor and takes out the solidified gas hydrate under ambient pressure, comprising:

   an output apparatus body having a supply port for the gas hydrate slurry on an upper part of a pressure vessel,
   a screw dewatering, compacting and molding device provided below said output apparatus body and having a drain and an outlet sealing device, and
   a cooling device which cools the vicinity of the outlet of said screw dewatering, compacting and molding device.

3. A gas hydrate dewatering apparatus according to claim 2, wherein a pressurized gas introducing pipe is connected to said output apparatus body above said screw dewatering, compacting and molding device, whereby gas hydrate forming substance can be supplied to said output apparatus body.

4. A gas hydrate dewatering apparatus according to claim 2, wherein a cutting device which cuts gas hydrate briquettes into predetermined lengths is further provided at an outlet of said screw dewatering, compacting and molding device.

5. A gas hydrate dewatering apparatus according to claim 2, wherein an outlet of said screw dewatering, compacting and molding device is formed in a rectangular shape in cross-section.

6. A gas hydrate dewatering apparatus according to claim 2, wherein the dewatering device which dewaters excess water from the introduced gas hydrate slurry is provided below said supply port.

7. A gas hydrate dewatering apparatus according to claim 6, wherein said dewatering device comprises either one or both of a dewatering screen and a mechanical dewatering apparatus which mechanically dewaters.

8. A gas hydrate dewatering apparatus according to claim 7, wherein said mechanical dewatering apparatus is a press dewaterer.

9. A gas hydrate dewatering apparatus according to claim 8, wherein a plurality of said press dewaterers are arranged vertically in a plurality of stages.

10. A gas hydrate dewatering apparatus according to claim 8, wherein facing sluice plates are provided on opposite sides of said press dewaterer, and overflow channels with approximate centers of upper edges of said sluice plates located above the face of rollers cut out to drain dewatered excess water to the side are formed.

11. A gas hydrate dewatering apparatus which dewaters gas hydrate slurry, comprising:

    a container having an internal space for accommodating said gas hydrate,
    a gas supply device which supplies raw material gas before being hydrated, to said internal space,
    a cooling device which cools gas hydrate accommodated in said internal space, and
    a stirring device which stirs and brings the raw material gas into contact with gas hydrate in said internal space.

12. A gas hydrate dewatering apparatus according to claim 11, wherein there is provided a pressurized dewatering device which pressurizes and dewaters the gas hydrate slurry before being accommodated in said container.

13. A gas hydrate dewatering apparatus according to claim 11, wherein said stirring device comprises a plurality of shafts having spiral protrusions on side faces thereof, arranged in said internal space, and which are rotated individually to convey the gas hydrate.

14. A gas hydrate dewatering apparatus according to claim 13, wherein said stirring device has two shafts, and both shafts are arranged parallel with each other, with the respective protrusions overlapping when viewed from the axial direction.

15. A gas hydrate dewatering apparatus according to claim 11, further comprising a detection device which detects a reaction condition of the gas hydrate accommodated in said internal space with gas, and an adjustment device which adjusts a gas supply amount according to said reaction condition.

16. A gas hydrate dewatering apparatus according to claim 15, wherein said detection device is provided on said container arranged in close proximity to an intake of the gas hydrate.

17. A gas hydrate dewatering apparatus according to claim 11, wherein the output port of the gas hydrate provided in said container is arranged at a lower position than the intake of the gas hydrate provided in the same container.

EP 1 375 630 A1

# FIG. 1

# FIG. 2

# FIG. 3

EP 1 375 630 A1

# FIG. 4A

# FIG. 4B

# FIG. 5

# FIG. 6

EP 1 375 630 A1

FIG. 7

EP 1 375 630 A1

# FIG. 8

METHANE GAS

70

71d

MH

72

73

72a

73a

82

82

82

71a

# FIG. 9A

# FIG. 9B

W : WATER MOLECULES
M : METHANE MOLECULES

**EP 1 375 630 A1**

## INTERNATIONAL SEARCH REPORT

Inte    d application No.

PCT/JP02/03084

| A. CLASSIFICATION OF SUBJECT MATTER |
|---|
| Int.Cl⁷ C10L3/00, B01J19/00 |

According to International Patent Classification (IPC) or to both national classification and IPC

| B. FIELDS SEARCHED |
|---|
| Minimum documentation searched (classification system followed by classification symbols) |
| Int.Cl⁷ C10L3/00, B01J19/00 |

Documentation searched other than minimum documentation to the extent that such documents are included in the fields searched

Electronic data base consulted during the international search (name of data base and, where practicable, search terms used)
JICST FILE(JOIS), WPIDS(STN)

| C. DOCUMENTS CONSIDERED TO BE RELEVANT | | |
|---|---|---|
| Category* | Citation of document, with indication, where appropriate, of the relevant passages | Relevant to claim No. |
| X<br>Y | JP 2001-64215 A (Director General, Agency of Industrial Science and Technology), 13 March, 2001 (13.03.01), Claims; Par. No. [0011] (Family: none) | 1,11,13-17<br>2-10,12 |
| X<br>Y | JP 2001-10990 A (Mitsui Engineering & Shipbuilding Co., Ltd.), 16 January, 2001 (16.01.01), Claims; Par. No. [0007] (Family: none) | 1,11,13-17<br>2-10,12 |
| X<br>Y | WO 99/19282 A1 (Mobil Oil Corp.), 22 April, 1999 (22.04.99), Claims; page 2, line 21 to page 3, line 2; page 11, line 22 to page 12, line 3 & EP 1025070 A1 & US 6180843 B1 & JP 2001-519470 A Claims; Par. Nos. [0008], [0043] to [0045] | 1,11,13-17<br>2-10,12 |

☒ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 May, 2002 (07.05.02) | 21 May, 2002 (21.05.02) |

| Name and mailing address of the ISA/ | Authorized officer |
|---|---|
| Japanese Patent Office | |
| Facsimile No. | Telephone No. |

Form PCT/ISA/210 (second sheet) (July 1998)

23

**INTERNATIONAL SEARCH REPORT**

Inte          plication No.

PCT/JP02/03084

C (Continuation).   DOCUMENTS CONSIDERED TO BE RELEVANT

| Category* | Citation of document, with indication, where appropriate, of the relevant passages | Relevant to claim No. |
|---|---|---|
| Y | Kozo OCHIAI, "Screw Press, <Kojo Sosa Series> New Enlarged Edition·Roka, Kagaku Kogyosha, 20 July, 1995 (20.07.95), pages 334 to 339 | 2-10,12 |
| P,X | Hirotsugu NAGAYASU et al., "Gas Hydrate no Renzoku Dassuiho, Dai 10 Kai Nihon Energy Gakkai Taikai Koen Yoshishu, 31 July, 2001 (31.07.01), pages 197 to 200 | 1-17 |

Form PCT/ISA/210 (continuation of second sheet) (July 1998)